(19) Europäisches Patentamt
European Patent Office
Office européen des brevets

(11) **EP 2 538 013 A1**

(12) **EUROPÄISCHE PATENTANMELDUNG**

(43) Veröffentlichungstag:
**26.12.2012  Patentblatt 2012/52**

(51) Int Cl.:
***E06B 3/67*** *(2006.01)*

(21) Anmeldenummer: **11170686.7**

(22) Anmeldetag: **21.06.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Solar Campus Gmbh**
**8620 Wetzikon (CH)**

(72) Erfinder:
• **Mathez, Stephan A.**
  **8620 Wetzikon (CH)**
• **Sachs, Walter**
  **8049 Zürich (CH)**

(74) Vertreter: **Latscha, Silvan**
**Latscha Schöllhorn Partner AG**
**Aeschenvorstadt 55**
**4051 Basel (CH)**

(54) **Winkelselektive Einstrahlungsdämmung an einer Gebäudehülle**

(57)     In einem Verfahren zur Herstellung eines Gebäudehüllenteils 19 zur winkelselektiven Einstrahlungsdämmung an einer Gebäudehülle, welches Gebäudehüllenteil 19 eine Außenfläche 29, eine der Außenfläche 29 entgegengesetzte Innenfläche 39 und eine die Außenfläche 29 und die Innenfläche 39 begrenzende Seitenkante aufweist, werden die Außenfläche 29 mit Außenstrukturen 219 und die Innenfläche 39 mit Innenstrukturen 319 versehen. Dabei werden die Außenstrukturen 219 und die Innenstrukturen 319 so zueinander angeordnet, dass das Gebäudehüllenteil 19 abhängig vom Einfallraumwinkel unterschiedlich lichtdurchlässig ist. Die Außenstrukturen 219 und die Innenstrukturen 319 werden insbesondere unter Einbezug einer Orientierung einer vorgesehenen Anwendung des Gebäudehüllenteils 19 und unter Einbezug der geografischen Breite der vorgesehenen Anwendung des Gebäudehüllenteils 19 angeordnet. Mit der erfindungsgemäßen Ausgestaltung der Außenstrukturen und der Innenstrukturen ist es möglich, dass die Außenstrukturen und die Innenstrukturen so angeordnet sind, dass eine das Gebäudehüllenteil umfassende Gebäudehülle optimal auf ein Orientierung und insbesondere auch auf eine von Südausrichtung abweichenden Orientierung, auf eine geneigte oder horizontale Anordnungen oder auf eine beliebige geografische Breite angepasst ist. Somit kann das Transmissionsverhalten des Gebäudehüllenteils der jeweiligen Situation entsprechend optimiert sein.

Fig. 5

**Beschreibung**

Technisches Gebiet

Die Erfindung betrifft ein Gebäudehüllenteil gemäß dem Oberbegriff des unabhängigen Anspruchs 1 sowie ein Verfahren zur Herstellung eines solchen Gebäudehüllenteils und ein Computerprogramm zur Ausführung eines solchen Verfahrens.

Solche Gebäudehüllenteile, die eine Außenfläche mit Außenstrukturen, eine der Außenfläche entgegengesetzte Innenfläche mit Innenstrukturen und eine die Außenfläche und die Innenfläche begrenzende Seitenkante aufweisen, wobei die Außenstrukturen und die Innenstrukturen so zueinander angeordnet sind, dass das Gebäudehüllenteil abhängig vom Einfällraumwinkel beispielsweise von direkter Sonneneinstrahlung unterschiedlich lichtdurchlässig ist, können in der Gebäudetechnik zur winkelselektiven Einstrahlungsdämmung an einer Gebäudehülle eingesetzt werden.

Stand der Technik

Zur gezielten Variation des Absorptionsgrades eines Gebäudes für Sonnenstrahlung werden heute Gebäudehüllen beziehungsweise Fassaden mit winkelselektivem Transmissionsverhalten eingesetzt. Insbesondere kann damit eine Einstrahlungsdämmung erreicht werden, die es ermöglicht, dass über die jahreszeitliche Variation der Sonnenbahn mehr oder weniger Transmission auftritt. Beispielsweise kann mit einer solchen Gebäudehülle im Winter eine hohe Transmission von direkter Sonneneinstrahlung erreicht werden, so dass der Heizbetrieb unterstützt werden kann, und im Sommer als Überhitzungsschutz eine tiefe Transmission, so dass der Kühlbetrieb reduziert werden kann. Dabei werden winkelselektive Gebäudehüllen beziehungsweise Fassaden und transparente Wärmedämmungen bezüglich ihres jahreszeitlichen Transmissionsverhaltens für mittlere nördliche Breitengrade an Südseiten der Gebäude beziehungsweise an Südfassaden optimiert. Beispielsweise werden in der Europäischen Norm (EN) 13363 "Sonnenschutzeinrichtungen in Kombination mit Verglasungen - Berechnung der Solarstrahlung und des Lichttransmissionsgrades", die vom Deutschen Institut für Normung (DIN) übernommen wurde, für entsprechende Jalousien oder Verschattungselemente Raumwinkel mit Elevationen von 0° bis 90° und Azimutwinkel von -90° bis +90° besprochen. Der Begriff "Elevation" bezieht sich in diesem Zusammenhang auf einen Vertikalwinkel über einer Horizontalebene. Der Begriff "Azimut" bezieht sich in diesem Zusammenhang auf die Abweichung von Süden, wobei ein Azimutwinkel von -90° Ostausrichtung, von -45° Südostausrichtung, von 0° Südausrichtung, von +45° Südwestausrichtung und von +90° Westausrichtung bedeutet. Solche winkelselektive Gebäudehüllen weisen häufig lamellenförmige Strukturen auf, die horizontal angeordnet sind. Die Gebäudehüllen sind dabei insofern winkelselektiv, als dass sich die Transmission beziehungsweise der Transmissionsgrad für Südausrichtung und variierende Elevationen - diese Richtung wird als transversale Achse bezeichnet - in Abhängigkeit vom Winkel signifikant ändern kann.

Unter anderem werden in diesem Zusammenhang Gebäudehüllenteile als Bauelemente für Gebäudehüllen hergestellt, die eingebaut eine winkelselektive Einstrahlungsdämmung der Gebäudehülle ermöglichen. Beispielsweise ist in der WO 01/53756 A2 eine Scheibe als Bauelement mit einer Außenfläche und einer Innenfläche beschrieben, die prismatische Erhöhungen als Strukturen auf der Außenfläche oder der Innenfläche hat. Durch die prismatischen Erhöhungen soll mittels Lichtumlenkung steil einfallendes Sonnenlicht im Sommer nach außen umgelenkt werden, wobei flach einfallendes Sonnenlicht im Winter die Scheibe nach innen ungehindert passieren können soll.

Die Transmission beziehungsweise der Transmissionsgrad bleibt für eine sich von Ost nach West bewegende Lichtquelle bei gleicher Elevation - diese Richtung wird als longitudinale Achse bezeichnet - näherungsweise konstant oder fällt allenfalls in Randzonen ab. Dies bewirkt, dass die bekannten Gebäudehüllen beziehungsweise Gebäudehüllenteile für von Süden abweichende Ausrichtungen, für geneigte oder horizontale Anordnungen wie beispielsweise Dachflächen sowie für andere geografische Breitengrade nicht oder nur mit beschränkter Wirksamkeit geeignet sind. Beispielsweise ist für Ost- und West-Ausrichtungen die Maßgabe, dass der Sonnenstand im Sommer hoch und im Winter niedrig ist, nicht zutreffend. Vielmehr wird bei diesen Ausrichtungen beim Sonnenauf- beziehungsweise -untergang der stark transmittierende Bereich des Winkelbereiches durchschritten und der hohe Sonnenstand tritt bei diesen Orientierungen nicht oder nur in einem Randbereich auf. Die Einstrahlung auf das Gebäude ist daher häufig sehr hoch, wenn das Gebäude eine solche bekannte Gebäudehülle aufweist, und durch die verlängerte Sonnenscheindauer am Morgen und Abend ist auch die eingestrahlte Energiemenge häufig signifikant und kann zu einer Überhitzung des Gebäudes beitragen.

Der vorliegenden Erfindung liegt daher die Aufgabe zu Grunde, ein Gebäudehüllenteil beziehungsweise eine Herstellung eines Gebäudehüllenteils so vorzuschlagen, dass eine winkelselektive Einstrahlungsdämmung an der Gebäudehülle für beliebige Ausrichtungen und Neigungen des Gebäudehüllenteils sowie für beliebige geografische Breitengrade des Standortes des Gebäudes möglich ist.

Darstellung der Erfindung

Die Aufgabe wird erfindungsgemäß durch ein Gebäudehüllenteil gelöst, wie es durch die Merkmale des unabhängigen Anspruchs 1 definiert ist, sowie durch ein Verfahren wie es durch die Merkmale des unabhängigen Anspruchs 10 definiert ist und ein Computerprogramm, wie es durch die Merkmale des unabhängigen Anspruchs 18 definiert ist. Vorteilhafte Ausgestaltungen der Erfindung ergeben sich aus den Merkmalen der abhängigen Ansprüche.

Das Wesen der Erfindung besteht im Folgenden: Ein Gebäudehüllenteil zur winkelselektiven Einstrahlungsdämmung an einer Gebäudehülle weist eine Außenfläche mit Außenstrukturen, eine der Außenfläche entgegengesetzte Innenfläche mit Innenstrukturen und eine die Außenfläche und die Innenfläche begrenzende beziehungsweise die Außenfläche mit der Innenfläche verbindende Seitenkante auf. Dabei sind die Außenstrukturen und die Innenstrukturen so zueinander angeordnet, dass das Gebäudehüllenteil abhängig vom Einfallraumwinkel unterschiedlich lichtdurchlässig ist. Die Außenstrukturen und die Innenstrukturen sind dabei in einem spitzen Winkel zu der Seitenkante angeordnet.

Der Begriff "Gebäudehüllenteil" im Sinne der Erfindung bezieht sich auf direkter oder diffuser Sonnenstrahlung oder Kunstlicht ausgesetzten Teilen, An- oder Einbauelementen eines Gebäudes wie beispielsweise Fassaden, Fassadenelemente, transparente Wärmedämmelemente (TWD), Fenster, Überdachungen und Vordächer sowie auf Energiegewinnungsanlagen wie beispielsweise thermische, photovoltaische und hybride Kollektoren sowie auf Vorrichtungen zur gezielten Licht- oder Sichtführung. Insbesondere kann unter dem Begriff "Gebäudehüllenteil" eine beliebige, geeignete, vorzugsweise plattenförmige Konstruktion von beispielsweise runder, drei-, vier- oder sechseckiger Form, deren Begrenzung als Seitenkante im Sinne dieser Erfindung bezeichnet wird, zum Einsatz in einer Gebäudehülle verstanden werden wie beispielsweise eine vorzugsweise strukturierte Glas- oder Kunstglasscheibe, eine Kunststoffplatte, eine metallische, mineralische oder hölzerne Konstruktion oder etwas Ähnliches. Insbesondere kann als Gebäudehüllenteil ein eisenarmes Glas zum Einsatz kommen. Das Gebäudehüllenteil kann als einstückiges Bauteil ausgestaltet sein oder es aus mehreren Elementen zusammengesetzt sein. Beispielsweise kann es auch als Verbundglas ausgestaltet sein, bei dem insbesondere entsprechend bedruckte Glasscheiben eingesetzt, vorgefertigte Folien oder schaltbare Schichten auf Glasscheiben aufgebracht bzw. zwischen mehreren Glasscheiben angebracht werden. Unter dem Begriff "Einfallraumwinkel" wird im Zusammenhang mit der Erfindung das Winkelduplet bestehend aus einem Zenit-Winkel zwischen der Senkrechten zur Außenfläche des Gebäudehüllenteils oder der auf das Gebäudehüllenteil einfallenden Lichteinstrahlung sowie aus einem Azimut-Winkel zwischen einer definierten Achse der Außenstruktur und der auf die Außenfläche des Gebäudehüllenteils senkrecht projizierten, einfallenden Lichteinstrahlung verstanden. Werden im Zusammenhang mit der Erfindung die Begriffe "Süden", "Norden", "Nordhalbkugel", "21. Juni" und "21. Dezember" verwendet, so gelten diese Begriffe ohne explizite andere Erläuterungen für Standorte auf der nördlichen Hemisphäre. Für Standorte auf der südlichen Hemisphäre gelten in diesen Fällen an deren Stelle 'Norden", 'Süden", 'Südhalbkugel", '21. Dezember" und "21. Juni" entsprechend.

Die Außenstrukturen und die Innenstrukturen können sich an der Außenfläche beziehungsweise an der Innenfläche von einer Seitenkante bis zu einer allfällig anderen Seitenkante erstrecken. Sie können insbesondere auch jeweils eine längliche Ausdehnung aufweisen, wobei diese längliche Ausdehnung eine Achse der Außenstrukturen definieren kann. Die Bereiche der Außenseite zwischen den Außenstrukturen und die Bereiche der Innenseite zwischen den Innenstrukturen können unverändert beziehungsweise unbearbeitet und lichtdurchlässig sein. Die Außenstrukturen und/ oder die Innenstrukturen können zum Schutz vor schädigenden Einwirkungen durch eine Schutzschicht wie beispielsweise bei einem Verbundglas abgedeckt sein. Der spitze Winkel zwischen den Außenstrukturen beziehungsweise den Innenstrukturen gemäß der Erfindung bezieht sich auf die Ebene der Außenfläche beziehungsweise der Innenfläche, so dass er insbesondere in einer Aufsicht auf die Außenfläche beziehungsweise Innenfläche erkenntlich ist. Er kann insbesondere alle Winkel umfassen, die kleiner als 90° und insbesondere wesentlich kleiner als 90° also beispielsweise kleiner als 85°, kleiner als 80°, kleiner als 70°, kleiner als 60°, kleiner als 50°, kleiner als 40°, kleiner als 30°, kleiner als 20°, kleiner als 10° oder kleiner als 5° sein. Gleichzeitig zu der spitzwinkligen Anordnung der Außenstrukturen beziehungsweise der Innenstrukturen und der Seitenkante können die Außenstrukturen und die Innenstrukturen auch in einem stumpfen Winkel zu der Seitenkante angeordnet sein. Beispielsweise ergibt die Summe dieses stumpfen Winkels und des spitzen Winkels bei der Tangente der Seitenkante 180°.

Mit der erfindungsgemäßen spitzwinkligen Anordnung der Außenstrukturen beziehungsweise einer Achse davon und der Innenstrukturen beziehungsweise einer Achse davon zu der Seitenkante ist es möglich, dass die Außenstrukturen und die Innenstrukturen so angeordnet sind, dass eine das Gebäudehüllenteil umfassende Gebäudehülle optimal auf eine von Süden abweichenden Ausrichtung, auf eine geneigte oder horizontale Anordnungen oder auf einen beliebigen geografischen Breitengrad angepasst ist. Somit kann das Transmissionsverhalten des Gebäudehüllenteils der jeweiligen Situation entsprechend optimiert sein. Beispielsweise kann den Gegebenheiten bei ungefährer Ost- oder Westausrichtung des Gebäudehüllenteils auf verhältnismäßig effektive Weise Rechnung getragen werden. Für Einstrahlungswinkel, wie sie typischerweise im Winter auftreten, kann beispielsweise eine Transmission von etwa 60% erfolgen, für solche, wie sie typischerweise im Sommer auftreten, beispielsweise eine Transmission von etwa 20%. Das Gebäudehüllenteil, das typischerweise rein passiv wirkt, kann nicht nur auf den Sonnenstand und die Fassadenorientierung abgestimmt sein, sondern zudem auch auf die Länge der Heiz- beziehungsweise Kühlperiode eines Gebäudes. Das Gebäudehüllenteil kann weiter beispielsweise als Verglasung verhältnismäßig dauerhaft sein und einen guten Witterungsschutz für das Gebäude bereitstellen. Weiter kann das Gebäudehüllenteil verhältnismäßig kostengünstig hergestellt sein und sich mit einer angepassten Optik für Wohn-, Geschäfts- und Industriehäuser eignen. Das erfindungsgemäße Gebäudehüllenteil kann auch mit dahinter angebrachten, aus massivem Holz, anderen Materialien oder Konstruktionen bestehenden Gebäudeverkleidung als Wärmekapazitätsspeicher kombiniert und/oder mit Lüftungsklappen zur Nutzung der Kühlung durch natürliche Konvektion versehen werden, welche saisonal oder bedarfsweise geöffnet beziehungsweise geschlossen werden können.

Erfindungsgemäß kann also erreicht werden, dass situationsangepasst die Einstrahlungsdämmung am Gebäude gesteuert werden kann, wobei dazu je nach der Himmelsorientierung der vorgesehenen Anwendung des Gebäudehüllenteils und geografischen Breite die Außenstrukturen beziehungsweise einer Achse davon und die Innenstrukturen beziehungsweise einer Achse davon in einem bestimmten Winkel zu einer Seitenkante schräg verlaufen. Entsprechend kann beispielsweise die Sonnenstrahlung auch bei anderen Orientierungen als nach Süden zum Heizen genutzt werden und gleichzeitig zum Schutz vor Überhitzung eine Einstrahldämmung bieten. Wie beispielsweise der oben erwähnten EN 13363 entnommen werden kann, ist diese Norm nicht für Elevationen von weniger als 0° anzuwenden, was mit dem Sachverhalt gleichbedeutend ist, dass gemäß der Norm nur horizontal liegende Lamellen beziehungsweise Strukturen in Betracht gezogen werden. Falls die Lamellen beziehungsweise die Strukturen geneigt werden, sind auch Einstrahlungselevationen von weniger als 0° möglich, was außerhalb des Bewertungsbereichs dieser Norm liegt. Damit erschließt sich, dass auch für andere als die mittleren Breitengrade und für andere Fassaden-Ausrichtungen als nach Süden dasselbe Verfahren zu deutlich besseren Resultaten bei der Überhitzungsbekämpfung insbesondere im Sommer und der Energiegewinnung im Winter führen kann. Da in dem erfindungsgemäßen Gebäudehüllenteil eine verhältnismäßig fein auflösende Winkelfunktion berücksichtigt sein kann, ist es möglich, Situationen mit mehr als einer Heiz- und/oder Kühlperiode Rechnung zu tragen. Weiter kann das erfindungsgemäße Gebäudehüllenteil auch für die winkelselektive situationsangepasste Einstrahlungsdämpfung von Kunstlicht ausgestaltet sein.

In einem Ausführungsbeispiel des Gebäudehüllenteils sind die Außenstrukturen als Lichtdiffusoren und die Innenstrukturen lichtundurchlässig ausgestaltet. Der Begriff "Lichtdiffusoren" bezieht sich in diesem Zusammenhang insbesondere auf Strukturen, die einfallendes Licht diffus streuen. Die Außenstrukturen als Lichtdiffusoren können beispielsweise durch Bedrucken, Ätzen, Sandstrahlen, Aufrauen, als Folie oder auf andere Weise an der Glasscheibe ausgestaltet werden. Damit kann die winkelabhängige Transmission durch die diffus streuende beispielsweise aufgedruckte, sandgestrahlte, geätzte oder aufgeraute Außenstrukturen und reflektierende oder absorbierende Innenstrukturen erreicht und für die genauen Bedürfnisse optimiert werden. Lichtundurchlässige Strukturen können beispielsweise durch Bedrucken, als Folie oder auf andere Weise am Gebäudehüllenteil aufgebracht werden insbesondere wenn das Gebäudehüllenteil als Glas- oder Kunstglasscheibe ausgestaltet ist. Mit einer solchen Ausgestaltung der Außenstrukturen und der Innenstrukturen kann die in einem bestimmten ersten Einfallraumwinkelbereich auf die Außenseite des Gebäudehüllenteils auftreffende Sonnenstrahlung an den Außenstrukturen so gestreut werden, dass zumindest ein Teil davon beim Durchdringen des Gebäudeteils an die lichtundurchlässigen Innenstrukturen umgeleitet wird. Damit kann ermöglicht werden, dass im ersten Einfallraumwinkelbereich zusätzlich zu der Sonnenstrahlung, die direkt auf die lichtundurchlässigen Innenstrukturen trifft, weitere Sonnenstrahlung auf die lichtundurchlässigen Innenstrukturen trifft, was insbesondere die Einstrahlungsdämmung beispielsweise im Sommer erhöhen kann. Gleichzeitig kann mit dieser Ausgestaltung der Außenstrukturen und der Innenstrukturen die in einem bestimmten zweiten Einfallraumwinkelbereich auf die Außenseite des Gebäudehüllenteils auftreffende Sonnenstrahlung an den Außenstrukturen so gestreut werden, dass zumindest ein Teil davon beim Durchdringen des Gebäudeteils zwischen den lichtundurchlässigen Innenstrukturen hindurch geleitet wird. Damit kann ermöglicht werden, dass im zweiten Einfallraumwinkelbereich zusätzlich zu der Sonnenstrahlung, die direkt an den lichtundurchlässigen Innenstrukturen vorbei geht, weitere Sonnenstrahlung durch das Gebäudehüllenteil hindurch dringen kann, was insbesondere die Einstrahlungsdämmung beispielsweise im Winter verringern kann.

In einem anderen Ausführungsbeispiel sind die Außenstrukturen prismenförmig und die Innenstrukturen lichtundurchlässig ausgestaltet. Mit einer solchen Ausgestaltung der Außenstrukturen und der Innenstrukturen kann die in einem bestimmten ersten Einfallraumwinkelbereich auf die Außenseite des Gebäudehüllenteils auftreffende Sonnenstrahlung an den Außenstrukturen so gebündelt werden, dass zumindest ein Teil davon beim Durchdringen des Gebäudehüllenteils an die lichtundurchlässigen Innenstrukturen umgeleitet wird. Damit kann ermöglicht werden, dass im ersten Einfallraumwinkelbereich zusätzlich zu der Sonnenstrahlung, die direkt auf die lichtundurchlässigen Innenstrukturen trifft, weitere Sonnenstrahlung auf die lichtundurchlässigen Innenstrukturen trifft, was insbesondere die Einstrahlungsdämmung beispielsweise im Sommer erhöhen kann. Gleichzeitig kann mit dieser Ausgestaltung der Außenstrukturen und der Innenstrukturen die in einem bestimmten zweiten Einfallraumwinkelbereich auf die Außenseite des Gebäudehüllenteils auftreffende Sonnenstrahlung an den Außenstrukturen so gebündelt werden, dass zumindest ein Teil davon beim Durchdringen des Gebäudeteils die lichtundurchlässigen Innenstrukturen passiert. Damit kann ermöglicht werden, dass im zweiten Einfallraumwinkelbereich zusätzlich zu der Sonnenstrahlung, die direkt durch die lichtdurchlässigen Innenstrukturen gelangt, weitere Sonnenstrahlung durch das Gebäudehüllenteil hindurch dringen kann, was insbesondere die Einstrahlungsdämmung beispielsweise im Winter verringern kann.

In den vorstehend beschriebenen beiden Ausführungsbeispielen von Außenstrukturen und Innenstrukturen können die lichtundurchlässigen Innenstrukturen als Lichtreflektoren ausgestaltet sein. Beispielsweise können die Innenstrukturen insbesondere bei glasscheibenartigen Gebäudehüllenteilen als spiegelnde Beschichtung wie eine aufgedruckte Silberschicht, eine opake Färbung oder eine geometrische, reflektierende Struktur ausgestaltet sein. Damit wird ermöglicht, dass die Einstrahlung, die insbesondere im ersten Einfallraumwinkelbereich auf die Innenstrukturen trifft, über die Außenfläche aus dem Gebäudehüllenteil reflektiert wird. Auf diese Weise kann die Erwärmung des Gebäudehüllenteils tief gehalten werden. Alternativ dazu können in den erwähnten vorstehend beschriebenen beiden Ausführungsbeispielen von Außenstrukturen und Innenstrukturen die lichtundurchlässigen Innenstrukturen als Lichtabsorber ausgestaltet sein, wobei die Lichtabsorber vorzugsweise photovoltaische Lichtabsorber sind. Auf diese Weise kann einerseits verhindert werden, dass auf die Innenstruktur treffende Strahlung das Gebäudehüllenteil durchdringt und andererseits kann insbesondere im Sommer die Energie der zu dämmenden Einstrahlung zur photovoltaischen Stromproduktion genutzt werden. Durch die Lichtbündelung kann dies mit hoher Effizienz geschehen.

In einem weiteren anderen Ausführungsbeispiel sind die Außenstrukturen auf eine erste Weise lichtpolarisierend und die Innenstrukturen auf eine zur ersten Weise komplementären zweiten Weise lichtpolarisierend ausgestaltet. Mit einer solchen Ausgestaltung der Außenstrukturen und der Innenstrukturen kann bei gewissen Einstrahlungswinkeln eine volle Auslöschung der Direktstrahlung erfolgen. Im anderen Extrem d.h. bei gewissen anderen Einstrahlungswinkeln kann beispielsweise eine Transmission von etwa 50% im Vergleich zu nicht-polarisierenden Innen- und Außenstrukturen erreicht werden. Dadurch lassen sich verhältnismäßig hohe Kontrastverhältnisse erzielen.

Insbesondere die Außenstrukturen können auch als eine dreidimensionale Struktur wie beispielsweise eine schräge Flanke ausgestaltet sein, wodurch sowohl der Transmission- wie der Reflexionsgrad in Abhängigkeit des Einstrahlungswinkels erhöht werden kann. Die Außenstrukturen und die Innenstrukturen können auch zusammenhängend beispielsweise im Querschnitt L-förmig ausgestaltet sein. Die Außenfläche und/oder die Innenfläche können mit antireflektierenden Beschichtungen versehen sein, wodurch der Transmissionsgrad erhöht werden kann. Die Außenfläche und/oder die Innenfläche können mit wellenlängen-selektiven Infrarotreflektoren versehen sein, wodurch die Wärmeabstrahlung der darunterliegenden Gebäudehüllenschicht reduziert werden kann, ohne den Transmissionsgrad für sichtbares Licht signifikant zu vermindern.

Vorzugsweise umfassen die Außenstrukturen in einer gemeinsamen Ebene parallel angeordnete Streifen und die Innenstrukturen in einer gemeinsamen Ebene parallel angeordnete Streifen. Dabei können die Streifen der Außenstrukturen und der Innenstrukturen jeweils gerade Seiten und eine feste Breite aufweisen. Eine solche Ausgestaltung der Außenstrukturen und Innenstrukturen ermöglichen eine verhältnismäßig einfache zweckmäßige Konstruktion des Gebäudehüllenteils. Dabei sind die Außenstrukturen vorzugsweise parallel zu den Innenstrukturen angeordnet, wobei die gemeinsame Ebene der Außenstrukturen und die gemeinsame Ebene der Innenstrukturen verschieden sind. Die Streifen der Außenstrukturen und die Streifen der Innenstrukturen sind dabei durch mathematische Ausdrücke, welche die Größen r, $d$, $m$, $c$, $\alpha_{\pm}$ und n zueinander in Beziehung setzten, vorzugsweise entsprechend den Gleichungen

$$\frac{r}{d} = \frac{\sin(\alpha_+)}{\sqrt{n^2 - \sin^2(\alpha_+)}} - \frac{\sin(\alpha_-)}{\sqrt{n^2 - \sin^2(\alpha_-)}}$$ und $m$ = $c$ = r ausgestaltet sind, wobei $m$ der Breite eines der Streifen der Außenstrukturen beispielsweise in [mm], r der Breite eines der Streifen der Innenstrukturen beispielsweise in [mm], $c$ dem Abstand zwischen den Streifen der Außenstrukturen beispielsweise in [mm], d der Dicke des Gebäudehüllenteils beispielsweise in [mm], $n$ dem mittleren Brechungsindex des Gebäudehüllenteils, $\alpha_-$ dem projizierten Einfallwinkel von zu dämpfendem Licht und $\alpha_+$ dem projizierten Einfallwinkel von nicht zu dämpfenden Licht entspricht. Eine solche Ausgestaltung der Außenstrukturen und Innenstrukturen ermöglicht eine verhältnismäßig effiziente, gut berechenbare Konstruktion des Gebäudehüllenteils.

Vorzugsweise sind die Außenstrukturen in einer Richtung senkrecht zur Außenfläche und zur Innenfläche versetzt zu den Innenstrukturen angeordnet. Indem die Außenstrukturen und die Innenstrukturen so nicht übereinander liegen, kann auf effiziente Weise eine winkelselektive Einstrahlungsdämmung durch das Gebäudehüllenteil erreicht werden. Die Abstimmung der Winkelbereiche, in denen die Einstrahlung gedämpft beziehungsweise nicht gedämpft werden soll, kann verhältnismäßig einfach durch geeignete Wahl des Versatzes der Außenstrukturen zu den Innenstrukturen in der Richtung senkrecht zur Außenfläche und zur Innenfläche eingestellt werden.

Vorzugsweise liegt der spitze Winkel in einem Bereich von etwa 25° bis etwa 55°, beziehungsweise von etwa -55° bis etwa -25°. Mit einem solchen spitzen Winkel kann insbesondere für europäische Breitengrade und insbesondere für nach Osten beziehungsweise nach Westen orientierte Gebäudehüllenteile ein optimiertes Gebäudehüllenteil hergestellt werden. Für stärker nach Süden orientierte Gebäudehüllenteile sind kleinere, für stärker nach Norden orientierte Gebäudehüllenteile größere Winkel zweckmäßig.

Vorzugsweise weist das Gebäudehüllenteil eine im Wesentlichen rechteckige Form mit vier Seitenkanten auf. Eine solche Grundform des Gebäudehüllenteils ermöglicht eine verhältnismäßig einfache Herstellung sowie einen verhältnismäßig einfachen, effizienten Einbau in einer Gebäudehülle. Dabei ist die Seitenkante, die in einem spitzen Winkel zu den Außenstrukturen beziehungsweise einer Achse davon und den Innenstrukturen beziehungsweise einer Achse davon angeordnet ist, vorzugsweise in einer vorgesehenen Anwendung des Gebäudehüllenteils im Wesentlichen horizontal ausgerichtet ist.

Vorzugsweise sind die Außenstrukturen und die Innenstrukturen im Wesentlichen lamellenförmig ausgestaltet. Unter dem Begriff "lamellenförmig" kann beispielsweise eine in einer Ebene parallele Anordnung von Streifen verstanden werden, wobei diese Streifen beispielsweise gerade Seiten und eine bestimmte Breite aufweisen. Eine solche lamellenförmige Ausgestaltung der Außenstrukturen und der Innenstrukturen ermöglicht eine verhältnismäßig einfache, effiziente Konstruktion und Herstellung des Gebäudehüllenteils.

Das oben beschriebene erfindungsgemäße Gebäudehüllenteil kann auch zur künstlerischen Gestaltung der Gebäudehülle oder zu anderen optischen Zwecken eingesetzt werden, indem die Außenstrukturen und die Innenstrukturen so angepasst sind, dass ein gewünschtes grafisches Muster beliebiger Geometrie wie beispielsweise durch unterbrochene Streifen oder punktartige Muster oder in einer fein aufgelösten Abstufung bei der Musterhelligkeit erzielt werden kann oder indem farblich angepasste Gebäudehüllenteile verwendet werden. Damit können sich für die künstlerische Gestaltung der Fassaden viele Möglichkeiten eröffnen, wobei das Kontrastverhältnis der Strukturen dadurch allerdings leicht negativ beeinflusst werden kann. Auch kann durch Streifenstrukturen in transversaler Richtung ein Moiré-Effekt erzeugt werden. Beim Vorbeigehen vor einer mit einem solchen Gebäudehüllenteil ausgestatteten Fassade können diese Moiré-Streifen mitwandern, so dass entsprechende Effekte gezielt eingesetzt werden können. Ebenfalls kann mit dem Gebäudehüllenteil an den Grenzen von lichtstreuend zu glatt an der Außenfläche aufgrund der Farbdispersion der Direktstrahlung bei der Reflexion an der Glasinnenfläche wellenlängenabhängige Effekte entstehen, wodurch Blau- bzw. Rotanteile des Spektrums reflektiert oder herausgefiltert werden können. Dies kann das reflektierte und transmittierte Licht im Farbton leicht verändern und entsprechende Effekte können gezielt eingesetzt werden. Weiter kann durch geeignete Wahl der Form und Position der Außenstrukturen und der Innenstrukturen der Direktanteil der Reflexion im Wesentlichen eliminiert werden. Dies kann für das Erscheinungsbild des Gebäudes oder um störende Reflexionseffekte zu vermeiden, von Interesse sein. Zudem können beispielsweise als Glasscheiben ausgestaltete Gebäudehüllenteile einen stufenlos variierbaren Sichtschutz bieten und durch die im Wesentlichen matt wirkende Glasoberfläche selbst bei verhältnismäßig geringem Mattanteil Vogelflugunfälle vermeiden. Das Gebäudehüllenteil kann beispielsweise als Fassadenglas vor Fenstern, opaken Wänden und Dämmungen oder vor transparenten Dämmungen (TWD) montiert werden. Ein allfälliger Luftraum zwischen dem Glas und der dahinter liegenden Fassade kann natürlich oder künstlich belüftet oder zur Energiegewinnung verwendet werden. Für diffuse, also nicht-direkte Sonneneinstrahlung, kann das Gebäudehüllenteil eine erhöhte Transmission für Diffus-Licht aufweisen, was beispielsweise im Sommer bei schlechter Witterung und dadurch bedingtem Heizenergiebedarf von Vorteil sein kann.

Ein weiterer Aspekt der Erfindung betrifft ein Verfahren zur Herstellung eines Gebäudehüllenteils zur winkelselektiven Einstrahlungsdämmung an einer Gebäudehülle wie beispielsweise ein Gebäudehüllenteil der oben beschriebenen Art, welches Gebäudehüllenteil eine Außenfläche, eine der Außenfläche entgegengesetzte Innenfläche und eine die Außenfläche und die Innenfläche begrenzende beziehungsweise die Außenfläche mit der Innenfläche verbindende Seitenkante aufweist. Die Außenfläche wird mit Außenstrukturen und die Innenfläche mit Innenstrukturen versehen, wobei die Außenstrukturen und die Innenstrukturen so zueinander angeordnet werden, dass das Gebäudehüllenteil abhängig vom Einfallraumwinkel unterschiedlich lichtdurchlässig ist. Dabei werden die Außenstrukturen und die Innenstrukturen unter Einbezug einer Orientierung einer vorgesehenen Anwendung des Gebäudehüllenteils und unter Einbezug der geografischen Breite der vorgesehenen Anwendung des Gebäudehüllenteils angeordnet. Der Begriff "vorgesehene Orientierung" bezieht sich in diesem Zusammenhang auf die Ausrichtung und Neigung, in der das Gebäudehüllenteil eingesetzt werden soll, also beispielsweise in einer Gebäudehülle verbaut werden soll. Der Begriff "vorgesehene geografische Breite" bezieht sich in diesem Zusammenhang insbesondere auf die Lage des Ortes an dem das Gebäudehüllenteil eingesetzt beziehungsweise angewendet werden soll.

Das erfindungsgemäße Verfahren ermöglicht die individualisierte Herstellung eines Gebäudehüllenteils, wodurch eine möglichst hohe Effizienz in der Anwendung erreicht werden kann. Insbesondere ermöglicht das erfindungsgemäße Verfahren auch die oben im Zusammenhang mit dem erfindungsgemäßen Gebäudehüllenteil beschriebenen Vorteile effizient umzusetzen.

Vorzugsweise werden Längsachsen der Außenstrukturen und der Innenstrukturen parallel zu einer Schnittlinie zwischen der Ebene der Sonneekliptik und der Ebene des Gebäudehüllenteils in der vorgesehenen Anwendung ausgerichtet, wenn das Gebäudehüllenteil in der vorgesehenen Anwendung an allen Tagen eines Kalenderjahres von direkter Sonneneinstrahlung erreicht werden kann. Damit kann für diese Art der Anwendung des Gebäudehüllenteils ein verhältnismäßig effizienter Einsatz ermöglicht werden. Dabei wird der spitze Winkel zwischen den Außenstrukturen und der Seitenkante beziehungsweise zwischen den Innenstrukturen und der Seitenkante für beliebig geneigte Gebäudehüllenteile durch einen mathematischen Ausdruck, welcher die Größen $\omega$, $\beta$, $\gamma$ und $\phi$ zueinander in Beziehung setzt, vorzugsweise entsprechend der Gleichung

$$\omega = -\text{sgn}(\phi \cdot \sin(\gamma)) \cdot \arccos\left(\frac{\sin(|\phi|) \cdot \sin(\beta) + \cos(|\phi|) \cdot \cos(\beta) \cdot \cos(\gamma)}{\sqrt{(\cos(|\phi|) \cdot \cos(\beta) + \sin(|\phi|) \cdot \cos(\gamma) \cdot \sin(\beta))^2 + \sin^2(\gamma) \cdot \sin^2(\beta)}}\right)$$

und für vertikal geneigte Gebäudehüllenteile durch einen mathematischen Ausdruck, welcher die Größen ω, γ und φ zueinander in Beziehung setzt, vorzugsweise entsprechend der Gleichung

$$\omega = -\text{sgn}(\phi \cdot \sin(\gamma)) \cdot \arccos\left(\frac{\sin(|\phi|)}{\sqrt{1 - \cos^2(\phi) \cdot \cos^2(\gamma)}}\right)$$ festgelegt, wobei ω dem spitzen Winkel, β einer Neigung (vertikal: β = 90°) und γ einer Ausrichtung (Süden: γ = 0°, Westen: γ positiv) des Gebäudehüllenteils und φ der geografischen Breite (Äquator: φ = 0°, nördliche Hemisphäre: φ positiv) in der vorgesehenen Anwendung entspricht. Mit einer solchen Berechnungsmethode kann das Gebäudehüllenteil für die weitere Art der Anwendung auf verhältnismäßig einfache Weise präzis dimensioniert werden.

Vorzugsweise werden Längsachsen der Außenstrukturen und der Innenstrukturen senkrecht zu einer Schnittlinie zwischen der Ebene der Sonnenekliptik und der Ebene des Gebäudehüllenteils in der vorgesehenen Anwendung ausgerichtet, wenn das Gebäudehüllenteil in der vorgesehenen Anwendung nicht an allen Tagen eines Kalenderjahres von direkter Sonneneinstrahlung erreicht werden kann. Diese Bedingung kann beispielsweise auf der Nordhalbkugel erfüllt sein, wenn das Gebäudehüllenteil nach Norden ausgerichtet ist. Damit kann für diese weitere Art der Anwendung des Gebäudehüllenteils ebenfalls ein verhältnismäßig effizienter Einsatz ermöglicht werden, indem der Transmissionsgrad für projizierte Einfallwinkel bei Sonnenauf- und/oder -untergang möglichst klein, ansonsten, zur Nutzung des diffusen Sonnenlichtes im Winter, möglichst groß ist.

Vorzugsweise wird ein erster projizierter Einfallwinkel mit einer maximalen Lichttransmission durch das Gebäudehüllenteil hindurch festgelegt. Dabei wird der erste projizierte Einfallwinkel vorzugsweise unter Berücksichtigung des projizierten Einfallwinkels am 21. Dezember in der vorgesehenen Anwendung des Gebäudehüllenteils festgelegt, was insbesondere für eine vorgesehene Anwendung des Gebäudehüllenteils auf der Nordhalbkugel zweckmäßig sein kann. Der erste projizierte Einfallwinkel wird durch einen mathematischen Ausdruck, welcher die Größen $\alpha_+$, β, γ, ε und φ zueinander in Beziehung setzt, vorzugsweise entsprechend der Gleichung $\alpha_+ = \arcsin(\cos(\phi) \cdot \cos(\gamma)) + (\beta-90°)-\varepsilon$ festgelegt, wobei $\alpha_+$ dem ersten projizierten Einfallwinkel, β einer Neigung und γ einer Ausrichtung des Gebäudehüllenteils in der vorgesehenen Anwendung, φ der geografischen Breite in der vorgesehenen Anwendung und ε der Schiefe der Ekliptik gegenüber dem Äquator entspricht. ε kann insbesondere etwa 23.4° sein. Mit einem solchen insbesondere über diese Gleichung berechneten ersten projizierten Einfallwinkel kann das Gebäudehüllenteil verhältnismäßig einfach so dimensioniert werden, dass ein Einfallraumwinkelbereich, in dem möglichst viel Transmission durch das Gebäudehüllenteil möglich sein soll, effizient festgelegt werden kann.

Vorzugsweise wird ein zweiter projizierter Einfallwinkel mit einer minimalen Lichttransmission durch das Gebäudehüllenteil hindurch festgelegt. Dabei wird der zweite projizierte Einfallwinkel vorzugsweise unter Berücksichtigung des Einfallraumwinkels am 21. Juni in der vorgesehenen Anwendung des Gebäudehüllenteils festgelegt, was insbesondere für eine vorgesehene Anwendung des Gebäudehüllenteils auf der Nordhalbkugel zweckmäßig sein kann. Der zweite projizierte Einfallwinkel wird durch einen mathematischen Ausdruck, welcher die Größen $\alpha_-$, β, γ, ε und φ zueinander in Beziehung setzt, vorzugsweise entsprechend der Gleichung $\alpha_- = \arcsin(\cos(\phi) \cdot \cos(\gamma)) + (\beta-90°)+ \varepsilon$ festgelegt, wobei $\alpha_-$ dem zweiten projizierten Einfallwinkel, β einer Neigung und γ einer Ausrichtung des Gebäudehüllenteils in der vorgesehenen Anwendung, φ der geografischen Breite in der vorgesehenen Anwendung und ε der Schiefe der Ekliptik gegenüber dem Äquator entspricht. Mit einem solchen insbesondere über diese Gleichung berechneten zweiten projizierten Einfallwinkel kann das Gebäudehüllenteil verhältnismäßig einfach so dimensioniert werden, dass ein Einfallraumwinkelbereich, in dem möglichst wenig Transmission durch das Gebäudehüllenteil möglich sein soll, effizient festgelegt werden kann.

Vorzugsweise wird das Gebäudehüllenteil so ausgestaltet, dass die Außenstrukturen in einer gemeinsamen Ebene parallel angeordnete Streifen und die Innenstrukturen in einer gemeinsamen Ebene parallel angeordnete Streifen umfassen. Die Streifen der Außenstrukturen und der Innenstrukturen können jeweils gerade Seiten und eine feste Breite aufweisen. Eine solche Ausgestaltung der Außenstrukturen und der Innenstrukturen ermöglich eine verhältnismäßig einfache effiziente Konstruktion des Gebäudehüllenteils. Dabei wird das Gebäudehüllenteil vorzugsweise so ausgestaltet, dass die Außenstrukturen parallel zu den Innenstrukturen angeordnet sind, wobei die gemeinsame Ebene der Außenstrukturen und die gemeinsame Ebene der Innenstrukturen verschieden sind, und dass die Streifen der Außenstrukturen und die Streifen der Innenstrukturen durch einen mathematischen Ausdruck, welcher die Größen r, $d$, $\alpha_{\pm}$ und $n$ zueinander in Beziehung setzt, vorzugsweise entsprechend der Gleichung

$$\frac{r}{d} = \frac{\sin(\alpha_+)}{\sqrt{n^2 - \sin^2(\alpha_+)}} - \frac{\sin(\alpha_-)}{\sqrt{n^2 - \sin^2(\alpha_-)}}$$ ausgestaltet sind, wobei r der Breite eines der Streifen der Innenstrukturen beispielsweise in [mm], $d$ der Dicke des Gebäudehüllenteils beispielsweise in [mm], $n$ dem mittleren Brechungsindex des Gebäudehüllenteils, $\alpha_+$ dem ersten projizierten Einfallwinkel und $\alpha_-$ dem zweiten projizierten Einfallwinkel entspricht.

Eine solche Ausgestaltung der Außenstrukturen und Innenstrukturen ermöglicht eine verhältnismäßig effiziente, gut berechenbare Konstruktion des Gebäudehüllenteils. Das Gebäudehüllenteil wird vorzugsweise so ausgestaltet, dass eine Breite der Streifen der Außenseite, eine Breite der Streifen der Innenseite und jeweils ein Abstand zwischen den Streifen im Wesentlichen gleich dimensioniert sind. Eine solche Ausgestaltung kann ein bevorzugtes Kontrastverhältnis ergeben, wobei auch von einer solchen Ausgestaltung abgewichen werden kann, beispielsweise, wenn das Gebäudehüllenteil in seiner vorgesehenen Anwendung eher heizende oder eher kühlende Eigenschaften haben soll.

Vorzugsweise werden die Außenstrukturen lichtstreuend ausgestaltet werden, wobei eine lichtstreuende Wirkung der Außenstrukturen so vorgesehen wird, dass ein das Gebäudehüllenteil durchquerendes Lichtband von der Außenseite bis zur Innenseite um etwa Faktor drei geweitet wird. Über eine solche Ausgestaltung der Außenstrukturen kann auf verhältnismäßig einfache Wiese ein effizientes Gebäudehüllenteil mit Lichtdiffusoren als Außenstrukturen wie oben beschrieben hergestellt werden. Der erwähnte Faktor der Aufweitung kann je nach Situation aber auch anders ausgestaltet sein, wobei er beispielsweise in einem Bereich von 2 bis 5 liegen kann.

Vorzugsweise werden die Außenstrukturen und die Innenstrukturen lamellenförmig ausgestaltet. Unter dem Begriff "lamellenförmig" kann beispielsweise eine in einer Ebene parallele Anordnung von Streifen verstanden werden, wobei diese Streifen beispielsweise gerade Seiten und eine bestimmten Breite aufweisen. Eine solche lamellenförmige Ausgestaltung der Außenstrukturen und der Innenstrukturen ermöglicht eine verhältnismäßig einfache effiziente Konstruktion und Herstellung des Gebäudehüllenteils.

Ein anderer weiterer Aspekt der Erfindung betrifft ein Computerprogramm, das Programmcodemittel aufweist, die dazu ausgestaltet sind, das oben beschriebene Verfahren zumindest teilweise zu implementieren, wenn das Computerprogramm auf einem Computer ausgeführt wird. Mit einem solchen Computerprogramm kann das erfindungsgemäße Verfahren verhältnismäßig einfach, schnell und exakt ausgeführt werden. Zudem kann mit einem solchen Computerprogramm das erfindungsgemäße Verfahren zweckmäßig und effizient implementiert und vertrieben werden.

Kurze Beschreibung der Zeichnungen

Im Folgenden werden das erfindungsgemäße Gebäudehüllenteil und das erfindungsgemäße Verfahren unter Bezugnahme auf die beigefügten Zeichnungen anhand von Ausführungsbeispielen detaillierter beschrieben. Es zeigen:

Fig. 1     eine schematische Querschnittsansicht eines Teils eines ersten Ausführungsbeispiels eines erfindungsgemäßen Gebäudehüllenteils;

Fig. 2     eine schematisch Ansicht auf das Gebäudehüllenteil von Fig. 1 für beispielsweise eine ostorientierte Fassade für eine geografische Breite des Objektstandorts von 45°;

Fig. 3     eine schematische Querschnittsansicht des Gebäudehüllenteils von Fig. 1 in einer für Winter vorgesehen Funktionsweise;

Fig. 4     eine schematische Querschnittsansicht des Gebäudehüllenteils von Fig. 1 in einer für Sommer vorgesehen Funktionsweise;

Fig. 5     eine schematische Querschnittsansicht eines Teils eines zweiten Ausführungsbeispiels eines erfindungsgemäßen Gebäudehüllenteils;

Fig. 6     eine schematische Querschnittsansicht eines Teils eines dritten Ausführungsbeispiels eines erfindungsgemäßen Gebäudehüllenteils; und

Fig. 7     eine schematische Querschnittsansicht eines Teils eines vierten Ausführungsbeispiels eines erfindungsgemäßen Gebäudehüllenteils.

Weg(e) zur Ausführung der Erfindung

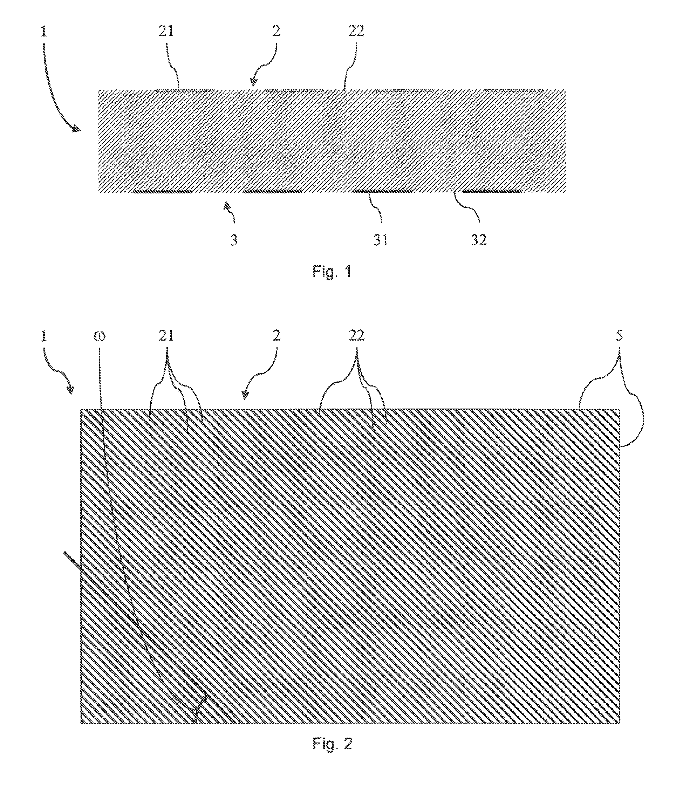

Fig. 1 zeigt eine Glasscheibe 1 als ein erstes Ausführungsbeispiel eines erfindungsgemäßen Gebäudehüllenteils mit einer Außenfläche 2 und einer der Außenfläche 2 entgegengesetzten Innenfläche 3. Die Außenfläche 2 weist Außenstrukturen 21 mit einer festen Breite auf sowie Außenzwischenbereiche 22, die zwischen den Außenstrukturen 21 liegen. Die Innenfläche 3 weist Innenstrukturen 31 mit einer festen Breite auf sowie Innenzwischenbereiche 32, die zwischen den Innenstrukturen 21 liegen.

Die Glasscheibe 1 ist aus einem eisenarmen Glas hergestellt. Die Außenstrukturen 21 sind durch Ätzung an der Glasscheibe 1 ausgebildet, wobei die Außenzwischenbereiche 22 belassen sind. Die Innenstrukturen 31 sind als eine spiegelnde Beschichtung mittels einer aufgedruckten Silberschicht an der Glasscheibe 1 ausgebildet, wobei die Innenzwischenbereiche 32 ebenfalls belassen sind.

Für die gesamte weitere Beschreibung gilt folgende Festlegung. Sind in einer Figur zum Zweck zeichnerischer Eindeutigkeit Bezugszeichen enthalten, aber im unmittelbar zugehörigen Beschreibungstext nicht erwähnt, so wird auf deren Erläuterung in vorangehenden Figurenbeschreibungen Bezug genommen. Sind außerdem im unmittelbar zu einer Figur gehörigen Beschreibungstext Bezugszeichen erwähnt, die in der zugehörigen Figur nicht enthalten sind, so wird auf die vorangehenden Figuren verwiesen.

In Fig. 2 ist die Glasscheibe 1 in einer Außenansicht gezeigt. Dabei sind die Außenfläche 2 und die Innenfläche 3 durch vier Seitenkanten 5 begrenzt. Die Glasscheibe 1 ist rechteckig ausgestaltet. Die Außenstrukturen 21 sowie auch die Innenstrukturen 31 der Glasscheibe 1 sind als verhältnismäßig schmale parallele Streifen ausgestaltet, welche je nach der Himmelsrichtung und Lage einer vorgesehenen Anwendung der Glasscheibe 1 unterschiedlich schräg verlaufen. Das heißt, angepasst an die jeweiligen Gegebenheiten umschreiben die parallelen Streifen beziehungsweise die Außenstrukturen 21 und die Innenstrukturen 31 einen größeren oder kleineren spitzen Winkel $\omega$ mit den Seitenkanten 5. Im Wesentlichen bestehen folgende Freiheitsgrade bei der Ausgestaltung der parallelen Streifen: die Breite der diffus streuenden Steifen also der Außenstrukturen 21 relativ zur Glasdicke; die Breite zwischen den diffus streuenden Steifen also der Außenzwischenbereiche 22 relativ zur Glasdicke; der Diffusionsgrad der Außenstrukturen 21, der die räumliche Dispersion des einfallenden Lichtes definiert; die Breite der spiegelnden Steifen also der Innenstrukturen relativ zur Glasdicke; die relative Position von diffus streuenden zu spiegelnden beziehungsweise absorbierenden Steifen beziehungsweise von Außenstrukturen zu Innenstrukturen relativ zur Glasdicke; und der spitze Winkel $\omega$, in dem die Streifen gegenüber der horizontalen Seitenkante 5 verlaufen.

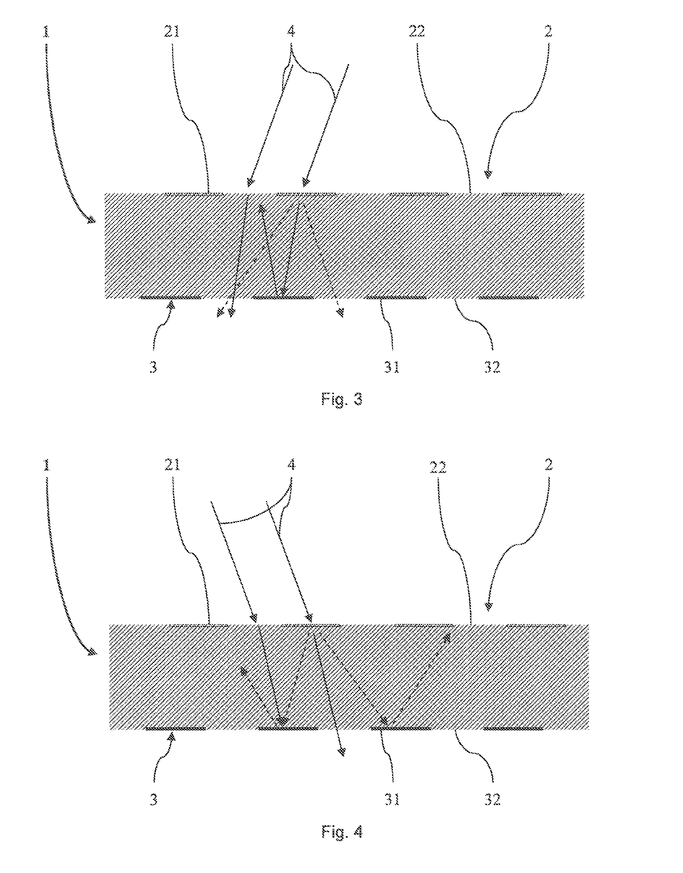

In Fig. 3 ist die Funktionsweise der Glasscheibe 1 im Winter gezeigt. Dabei ist ersichtlich, dass Sonnenstrahlung 4 in einem bestimmten ersten Einfallraumwinkelbereich auf die Außenfläche 2 der Glasscheibe 1 auftrifft. An den Außenzwischenbereichen 22 wird die Sonnenstrahlung 4 auf übliche Art entsprechend dem Brechungsindex von Glas gebrochen und durchdringt dann die Glasscheibe 1 bis zu seiner Innenfläche 3. An den Außenstrukturen 21 wird die Sonnenstrahlung 4 gestreut und durchdringt die Glasscheibe 1 bis zu seiner Innenfläche 3. An den Innenstrukturen 31 wird die Sonnenstrahlung 4 reflektiert und durchdringt wiederum die Glasscheibe 1 in Richtung der Außenfläche 2 beziehungsweise nach außen. Die Außenstrukturen 21 sind relativ zu den Innenstrukturen 31 so angeordnet, dass verhältnismäßig viel Sonnenstrahlung 4 die Glasscheibe 1 direkt durch die Außenzwischenbereiche 22 über die Innenzwischenbereiche 32 durch die Glasscheibe 1 hindurch dringen kann. Die streuende Wirkung der Außenstrukturen 21 bewirkt außerdem, dass im ersten Einfallraumwinkelbereich zusätzliche Sonnenstrahlung 4 über die Innenzwischenbereiche 32 durch die Glasscheibe 1 hindurch dringt, so dass im Winter verhältnismäßig viel Sonnenstrahlung 4 die Glasscheibe 1 durchdringen kann.

In Fig. 4 ist die Funktionsweise der Glasscheibe 1 im Sommer gezeigt. Dabei ist ersichtlich, dass Sonnenstrahlung 4 in einem bestimmten zweiten Einfallraumwinkelbereich auf die Außenfläche 2 der Glasscheibe 1 auftrifft. An den Außenzwischenbereichen 22 wird die Sonnenstrahlung 4 wiederum auf übliche Art gebrochen und durchdringt dann die Glasscheibe 1 bis zu seiner Innenfläche 3. An den Außenstrukturen 21 wird die Sonnenstrahlung 4 gestreut und durchdringt die Glasscheibe 1 bis zu seiner Innenfläche 3. An den Innenstrukturen 31 wird die Sonnenstrahlung 4 reflektiert und durchdringt die Glasscheibe 1 dann durch die Außenfläche 2 nach außen hin. Die Außenstrukturen 21 sind relativ zu den Innenstrukturen 31 so angeordnet, dass verhältnismäßig wenig Sonnenstrahlung 4 die Glasscheibe 1 direkt durch die Außenzwischenbereiche 22 über die Innenzwischenbereiche 32 durch die Glasscheibe 1 hindurch dringen kann. Die streuende Wirkung der Außenstrukturen 21 bewirkt außerdem, dass im zweiten Einfallraumwinkelbereich zusätzliche Sonnenstrahlung 4 auf die reflektierenden Innenstrukturen 31 trifft, so dass im Sommer verhältnismäßig wenig Sonnenstrahlung 4 die Glasscheibe 1 durchdringen kann.

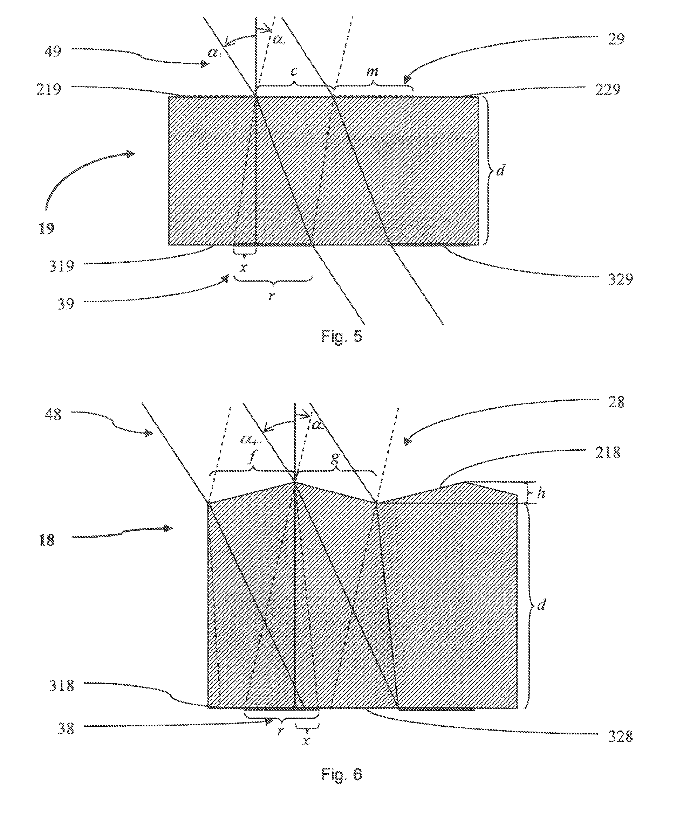

Fig. 5 zeigt eine Glasscheibe 19 als ein zweites Ausführungsbeispiel eines erfindungsgemäßen Gebäudehüllenteils mit einer Außenfläche 29 und einer der Außenfläche 29 entgegengesetzten Innenfläche 39. Die Außenfläche 29 weist Außenstrukturen 219 mit einer festen Breite auf sowie Außenzwischenbereiche 229, die zwischen den Außenstrukturen 219 liegen. Die Innenfläche 39 weist Innenstrukturen 319 mit einer festen Breite auf sowie Innenzwischenbereiche 329, die zwischen den Innenstrukturen 219 liegen.

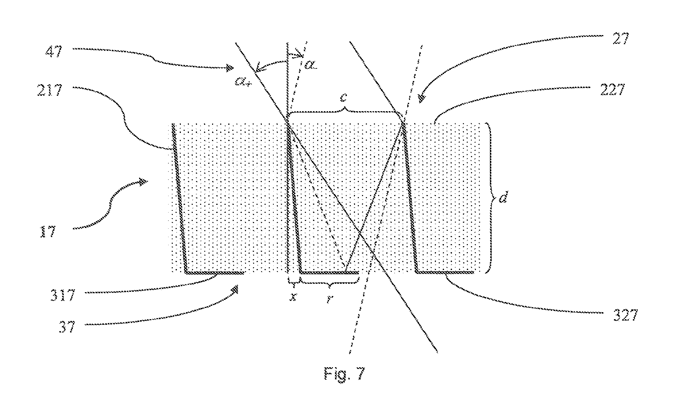

Die Glasscheibe 19 ist im Wesentlichen korrespondierend zu der in den Fig. 1 bis Fig. 4 gezeigten Glasscheibe 1 ausgestaltet. Die Dimensionierung und Herstellung solcher vorgehend beschriebener Glasscheiben 1, 19 wie auch nachgehend beschriebener Glasscheiben (siehe Glasscheibe 18 in Fig. 6 und Glasscheibe 17 in Fig. 7) erfolgt dabei vorzugsweise insbesondere über folgende Schritte:

Die Achsen-Drehung $\omega$ beliebiger winkelselektiver Außen- und Innenstrukturen richtet sich nach der Orientierung das heißt nach der Ausrichtung und Neigung der Glasscheibe 1, 19, 18, 17 in ihrer vorgesehenen Anwendung sowie nach der geografischen Breite des Objektstandortes, an dem die Glasscheibe angewendet wird. Wenn die Glasscheibe 1, 19, 18, 17 an allen Tagen eines Kalenderjahres direkte Sonneneinstrahlung erhalten kann, ist die longitudinale Achse der Außen- und Innenstrukturen parallel zur Schnittlinie zwischen Sonnenekliptik und Glasscheibe 1, 19, 18, 17 auszurichten, ansonsten senkrecht. Letzteres gilt beispielsweise auf der Nordhalbkugel im Winter für Glasscheiben 1, 19, 18, 17 beziehungsweise Gebäudehüllenteile, die nach Norden ausgerichtet sind. Für eine Glasscheiben 1, 19, 18, 17 gilt folgende Beziehung: durch einen mathematischen Ausdruck, welcher die Größen ω, β, γ und φ zueinander in Beziehung setzt,

$$(1) \quad \omega = -\mathrm{sgn}(\phi \cdot \sin(\gamma)) \cdot \arccos\left( \frac{\sin(|\phi|) \cdot \sin(\beta) + \cos(|\phi|) \cdot \cos(\beta) \cdot \cos(\gamma)}{\sqrt{(\cos(|\phi|) \cdot \cos(\beta) + \sin(|\phi|) \cdot \cos(\gamma) \cdot \sin(\beta))^2 + \sin^2(\gamma) \cdot \sin^2(\beta)}} \right)$$

Dabei bezeichnet β eine Neigung der Glasscheibe 1, 19, 18, 17, γ eine Ausrichtung der Glasscheibe 1, 19, 18, 17, und φ die geografische Breite des Objektstandortes.

Die Winkelabhängigkeit der Außen- und Innenstrukturen in transversaler Achsenrichtung kann auf vielfältige Weise wie beispielsweise durch geometrische oder strukturelle Gestaltung der Glasscheibe 1, 19, 18, 17 erreicht werden. Dazu ist bei paralleler wie senkrechter Ausrichtung wie oben beschrieben zuerst zu ermitteln, bei welchem Winkel $\alpha_\pm$ ein Maximum bzw. Minimum an Transmission erreicht werden soll. Diese beiden Winkel werden am 21. Juni bzw. 21. Dezember erreicht, wenn jeweils Sonnenazimut und Ausrichtung der Glasscheibe 1, 19, 18, 17 übereinstimmen, werden durch mathematische Ausdrücke, welche die Größen $\alpha_\pm$, β, γ, ε und φ zueinander in Beziehung setzten, vorzugweise entsprechend folgenden Gleichungen beschrieben:

$$(2) \quad \alpha_\pm = \arcsin(\cos(\phi) \cdot \cos(\gamma)) + (\beta - 90°) \mp \varepsilon,$$

wobei $\varepsilon \cong 23.4°$ die Schiefe der Ekliptik gegenüber dem Äquator ist, die auch als Erdneigung oder Obliquität bezeichnet wird. Im Weiteren sind mit den vor- und nachstehend beschrieben Außenstrukturen und Innenstrukturen Ausführungen erläutert, welche für die Winkel $\alpha_\pm$ (durchgehende Linien) und $\alpha_-$ (unterbrochene Linien) verhältnismäßig hohe Kontrastverhältnisse ergeben.

Bei der Glasscheibe von Fig. 4 werden auf der Außenfläche 29 (Luftseite) durch Bedrucken, Ätzen, Sandstrahlen, Aufrauen oder auf andere Weise Streifen als die Außenstrukturen 219 parallel zur longitudinalen Achse aufgebracht, welche das einfallende Licht beziehungsweise die einfallende Sonnenstrahlung 49 diffus streuen. Die Abschnitte zwischen den Streifen also die Außenzwischenbereiche 229 werden unverändert belassen. Auf der Innenfläche 39 der Glasscheibe 19 werden durch Bedrucken oder auf andere Weise Streifen als Innenstrukturen 319 ebenfalls parallel zur longitudinalen Achse aufgebracht, welche das einfallende Licht beziehungsweise die einfallende Sonnenstrahlung 49 reflektieren oder absorbieren. Die Abschnitte zwischen den Streifen also die Innenzwischenbereiche 329 werden unverändert belassen. Die Breite und relative Lage der oberen und unteren Streifen also der Außenstrukturen 21 und der Innenstrukturen 31 der Glasscheibe sind so zu wählen, dass unter dem Winkel $\alpha_+$ das Licht, welches außen beziehungsweise oben durch die klaren Abschnitte also die Außenzwischenbereiche 229 fällt, unten wiederum durch die klaren Abschnitte also die Innenzwischenbereiche 329 hindurchtritt, und unter dem Winkel $\alpha_-$ das Licht, welches außen beziehungsweise oben durch die klaren Abschnitte also die Außenzwischenbereiche 229 fällt, unten auf die reflektierenden Abschnitte also die Innenstrukturen 319 trifft. Dabei ist jeweils die Lichtbrechung des Glases durch einen mathematischen Ausdruck, welcher die Größen $r$, $d$, $\alpha_\pm$ und $n$ zueinander in Beziehung setzt, zu berücksichtigen, vorzugsweise entsprechend der Gleichung

$$(3) \quad \frac{r}{d} = \frac{\sin(\alpha_+)}{\sqrt{n^2 - \sin^2(\alpha_+)}} - \frac{\sin(\alpha_-)}{\sqrt{n^2 - \sin^2(\alpha_-)}},$$

wobei $d$ [mm] die Dicke des Glases beziehungsweise der Glasscheibe 19, $r$ [mm] die Breite des Reflektors beziehungsweise der Innenstrukturen 319 und $n$ der mittlere Brechungsindex von Glas ist. Der zweite Summand in obiger Gleichung gibt den Versatz der Außen- und Innenstrukturen x/d an. Die streuende Wirkung der diffusen Streifen beziehungsweise der Außenstrukturen 219 mit Breite $m$ [mm] ist so zu wählen, dass das einfallende Lichtband beim Durchqueren der Glasdicke etwa um einen Faktor drei geweitet wird.

In der Fig. 6 ist eine Glasscheibe 18 als ein drittes Ausführungsbeispiel eines erfindungsgemäßen Gebäudehüllenteils mit einer Außenfläche 28 und einer der Außenfläche 28 entgegengesetzten Innenfläche 38 gezeigt. Die Außenfläche 28 weist prismenförmigen Außenstrukturen 218 mit einer festen Breite auf. Die Innenfläche 38 weist Innenstrukturen 318 mit einer festen Breite auf sowie Innenzwischenbereiche 328, die zwischen den Innenstrukturen 218 liegen. Durch die als flache Prismen ausgestaltete Außenstrukturen 218 an der Außenfläche der Glasscheibe leiten die unter den Winkeln $\alpha_+$ beziehungsweise $\alpha_-$ einfallenden Lichtbänder beziehungsweise einfallender Sonnenstrahlung 48 durch Lichtbrechung in maximalem beziehungsweise minimalem Maß in Richtung der Reflektoren beziehungsweise der Innenstrukturen 318.

Fig. 7 zeigt eine Glasscheibe 17 als ein viertes Ausführungsbeispiel eines erfindungsgemäßen Gebäudehüllenteils mit einer Außenfläche 27 und einer der Außenfläche 27 entgegengesetzten Innenfläche 37. Die Außenfläche 27 weist Außenstrukturen 217 auf sowie Außenzwischenbereiche 227, die zwischen den Außenstrukturen 217 liegen. Die Außenstrukturen 217 durchragen die Glasscheibe 17 und erstrecken sich von der Außenfläche 27 bis zur Innenfläche 37. Die Innenfläche 37 weist Innenstrukturen 317 mit einer festen Breite auf sowie Innenzwischenbereiche 327, die zwischen den Innenstrukturen 217 liegen. Die Außenstrukturen 217 sind jeweils mit einer der Innenstrukturen 317 verbunden, so dass sie zusammen jeweils im Querschnitt eine im Wesentlichen L-förmige Form aufweisen.

Durch die als L-förmige Lamellen ausgestalteten Außenstrukturen 217 und Innenstrukturen 317 werden unter den Winkeln $\alpha_+$ bzw. $\alpha_-$ die einfallenden Lichtbänder beziehungsweise einfallende Sonnenstrahlung 47 dank Reflexionen maximal durch die Konstruktion beziehungsweise die Glasscheibe 17 durchgelassen beziehungsweise zurückgeworfen. Für den Fall

$$(4) \qquad \alpha_+ = -\alpha_-$$

mit x = *0* mm ist das Kontrastverhältnis maximal (volle Transmission beziehungsweise volle Reflexion). Mit

$$(5) \qquad \frac{x}{d} = \sin((\alpha_+ + \alpha_-)/4)$$

wird für $\alpha_+ \neq -\alpha_-$ ein optimales Kontrastverhältnis erreicht.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang und den Geist der folgenden Ansprüche zu verlassen. Insbesondere umfasst die Erfindung ebenfalls Ausführungsformen mit jeglicher Kombination von Merkmalen, die vorstehend oder nachfolgend zu verschiedenen Ausführungsformen genannt oder gezeigt sind. Zum Beispiel kann die Erfindung auch durch folgende weitere konstruktive Variationen realisiert sein:

-   Mit einer analogen Konstruktionsweise wie oben mit Bezug auf Fig. 5 beschrieben kann durch Verwendung von lichtpolarisierenden Streifen als Außenstrukturen und Innenstrukturen, welche für *c* und r gerade komplementär polarisiert sind, die Transmission unter einem Winkel $\alpha_+$ maximal sein und unter dem Winkel $\alpha_-$ annähernd oder ganz auf null abfallen.

-   Die offenbarten und insbesondere die oben in den Fig. 5, Fig. 6 und Fig. 7 beschriebenen Anordnungen und Ausgestaltungen von Außenstrukturen und Innenstrukturen können in vorteilhafter Weise auch so angeordnet sein, dass sie keinen spitzen Winkel mit einer der Seitenkanten bilden. Sie können also auch horizontal angeordnet sein.

Die Erfindung umfasst ebenfalls einzelne Merkmale in den Figuren auch wenn sie dort im Zusammenhang mit anderen Merkmalen gezeigt sind und/oder vorstehend oder nachfolgend nicht genannt sind. Auch können die in den Figuren und der Beschreibung beschriebenen Alternativen von Ausführungsformen und einzelne Alternativen deren Merkmale vom Erfindungsgegenstand ausgeschlossen sein.

Im Weiteren schließt der Ausdruck "umfassen" und Ableitungen davon andere Elemente oder Schritte nicht aus. Ebenfalls schließt der unbestimmte Artikel "ein" bzw. "eine" und Ableitungen davon eine Vielzahl nicht aus. Die Funktionen mehrerer in den Ansprüchen aufgeführter Merkmale können durch eine Einheit erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Ein Computerprogramm kann auf einem geeigneten Medium gespeichert sein und/oder vertrieben werden, wie beispielsweise auf einem optischen Speichermedium oder einem Festmedium, das zusammen mit oder als Teil von anderer Hardware bereitgestellt wird. Es kann auch in anderer Form vertrieben werden, wie beispielsweise über das Internet oder andere verkabelte oder unverkabelte Telekommunikationssysteme. Insbesondere kann ein Computerprogramm beispielsweise ein auf einem computerlesbaren Medium gespeichertes Computerprogrammprodukt sein, das dazu ausgestaltet ist, ausgeführt zu werden, um ein Verfahren zu implementieren, insbesondere das erfindungsgemäße Verfahren. Alle Bezugszeichen in den Ansprüchen sind nicht als den Umfang der Ansprüche einschränkend zu verstehen.

**Patentansprüche**

1. Gebäudehüllenteil (1; 17; 18; 19) zur winkelselektiven Einstrahlungsdämmung, welches Gebäudehüllenteil (1; 17; 18; 19) eine Außenfläche (2; 27; 28; 29) mit Außenstrukturen (21; 217; 218; 219), eine der Außenfläche (2; 27; 28; 29) entgegengesetzte Innenfläche (3; 37; 38; 39) mit Innenstrukturen (31; 317; 318; 319) und eine die Außenfläche (2; 27; 28; 29) und die Innenfläche (3; 37; 38; 39) begrenzende Seitenkante (5) aufweist, wobei die Außenstrukturen (21; 217; 218; 219) und die Innenstrukturen (31; 317; 318; 319) so zueinander angeordnet sind, dass das Gebäudehüllenteil (1; 17; 18; 19) abhängig vom Einfallraumwinkel unterschiedlich lichtdurchlässig ist, **dadurch gekennzeichnet, dass** die Außenstrukturen (21; 217; 218; 219) und die Innenstrukturen (31; 317; 318; 319) in einem spitzen Winkel zu der Seitenkante (5) angeordnet sind.

2. Gebäudehüllenteil (1; 17; 18; 19) nach Anspruch 1, bei dem die Außenstrukturen (21; 217; 218; 219) als Lichtdiffusoren und die Innenstrukturen (31; 317; 318; 319) lichtundurchlässig ausgestaltet sind.

3. Gebäudehüllenteil (1; 17; 18; 19) nach Anspruch 1, bei dem die Außenstrukturen (21; 217; 218; 219) prismenförmig und die Innenstrukturen (31; 317; 318; 319) lichtundurchlässig ausgestaltet sind.

4. Gebäudehüllenteil (1; 17; 18; 19) nach Anspruch 2 oder 3, bei dem die Innenstrukturen (31; 317; 318; 319) als Lichtreflektoren ausgestaltet sind.

5. Gebäudehüllenteil (1; 17; 18; 19) nach Anspruch 2 oder 3, bei dem die Innenstrukturen (31; 317; 318; 319) als Lichtabsorber ausgestaltet sind, wobei die Lichtabsorber photovoltaische Lichtabsorber sind.

6. Gebäudehüllenteil (1; 17; 18; 19) nach einem der vorangehenden Ansprüche, bei dem die Außenstrukturen (21; 217; 218; 219) in einer gemeinsamen Ebene parallel angeordnete Streifen und die Innenstrukturen (31; 317; 318; 319) in einer gemeinsamen Ebene parallel angeordnete Streifen umfassen.

7. Gebäudehüllenteil (1; 17; 18; 19) nach Anspruch 6, bei dem die Außenstrukturen (21; 217; 218; 219) parallel zu den Innenstrukturen (31; 317; 318; 319) angeordnet sind, wobei die gemeinsame Ebene der Außenstrukturen (21; 217; 218; 219) und die gemeinsame Ebene der Innenstrukturen (31; 317; 318; 319) verschieden sind.

8. Gebäudehüllenteil (1; 17; 18; 19) nach einem der vorangehenden Ansprüche, bei dem die Außenstrukturen (21; 217; 218; 219) in einer Richtung senkrecht zur Außenfläche (2; 27; 28; 29) und zur Innenfläche (3; 37; 38; 39) versetzt zu den Innenstrukturen (31; 317; 318; 319) angeordnet sind.

9. Gebäudehüllenteil (1; 17; 18; 19) nach einem der vorangehenden Ansprüche, bei dem die Außenstrukturen (21; 217; 218; 219) und die Innenstrukturen (31; 317; 318; 319) im Wesentlichen lamellenförmig ausgestaltet sind.

10. Verfahren zur Herstellung eines Gebäudehüllenteils (1; 17; 18; 19) zur winkelselektiven Einstrahlungsdämmung, welches Gebäudehüllenteil (1; 17; 18; 19) eine Außenfläche, eine der Außenfläche (2; 27; 28; 29) entgegengesetzte Innenfläche (3; 37; 38; 39) und eine die Außenfläche (2; 27; 28; 29) und die Innenfläche (3; 37; 38; 39) begrenzende Seitenkante (5) aufweist, bei welchem Verfahren die Außenfläche (2; 27; 28; 29) mit Außenstrukturen (21; 217; 218; 219) und die Innenfläche (3; 37; 38; 39) mit Innenstrukturen (31; 317; 318; 319) versehen werden, wobei die Außenstrukturen (21; 217; 218; 219) und die Innenstrukturen (31; 317; 318; 319) so zueinander angeordnet werden, dass das Gebäudehüllenteil (1; 17; 18; 19) abhängig vom Einfallraumwinkel unterschiedlich lichtdurchlässig ist, **dadurch gekennzeichnet, dass** die Außenstrukturen (21; 217; 218; 219) und die Innenstrukturen (31; 317; 318; 319) unter Einbezug einer Orientierung einer vorgesehenen Anwendung des Gebäudehüllenteils (1; 17; 18; 19) und unter Einbezug der geografischen Breite der vorgesehenen Anwendung des Gebäudehüllenteils (1; 17; 18; 19) angeordnet werden.

**11.** Verfahren nach Anspruch 10, bei dem Längsachsen der Außenstrukturen (21; 217; 218; 219) und der Innenstrukturen (31; 317; 318; 319) parallel zu einer Schnittlinie der Ebene der Sonnenekliptik und der Ebene des Gebäudehüllenteils (1; 17; 18; 19) in der vorgesehenen Anwendung ausgerichtet werden, wenn das Gebäudehüllenteil (1; 17; 18; 19) in der vorgesehenen Anwendung an allen Tagen eines Kalenderjahres von direkter Sonneneinstrahlung erreicht werden kann.

**12.** Verfahren nach Anspruch 11, bei der der spitze Winkel zwischen den Außenstrukturen (21; 217; 218; 219) und der Seitenkante (5) beziehungsweise zwischen den Innenstrukturen (31; 317; 318; 319) und der Seitenkante (5) gemäß einen mathematischen Ausdruck, welcher die Größen $\omega$, $\beta$, $\gamma$ und $\phi$ zueinander in Beziehung setzt, vorzugsweise entsprechend der Gleichung

$$\omega = -\operatorname{sgn}(\phi \cdot \sin(\gamma)) \cdot \arccos\left( \frac{\sin(|\phi|) \cdot \sin(\beta) + \cos(|\phi|) \cdot \cos(\beta) \cdot \cos(\gamma)}{\sqrt{(\cos(|\phi|) \cdot \cos(\beta) + \sin(|\phi|) \cdot \cos(\gamma) \cdot \sin(\beta))^2 + \sin^2(\gamma) \cdot \sin^2(\beta)}} \right)$$

festgelegt wird, wobei $\omega$ dem spitzen Winkel, $\beta$ einer Neigung und $\gamma$ einer Ausrichtung des Gebäudehüllenteils (1; 17; 18; 19) in der vorgesehenen Anwendung und $\phi$ der geografischen Breite in der vorgesehenen Anwendung entspricht.

**13.** Verfahren nach einem der Ansprüche 10 bis 12, bei dem ein erster projizierter Einfallwinkel mit einer maximalen Lichttransmission durch das Gebäudehüllenteil (1; 17; 18; 19) hindurch festgelegt wird.

**14.** Verfahren nach einem der Ansprüche 10 bis 13, bei dem ein zweiter projizierter Einfallwinkel mit einer minimalen Lichttransmission durch das Gebäudehüllenteil (1; 17; 18; 19) hindurch festgelegt wird.

**15.** Verfahren nach Anspruch 13 oder 14, bei dem das Gebäudehüllenteil (1; 17; 18; 19) so ausgestaltet wird, dass die Außenstrukturen (21; 217; 218; 219) in einer gemeinsamen Ebene parallel angeordnete Streifen und die Innenstrukturen (31; 317; 318; 319) in einer gemeinsamen Ebene parallel angeordnete Streifen umfassen.

**16.** Verfahren nach Anspruch 15, bei dem das Gebäudehüllenteil (1; 17; 18; 19) so ausgestaltet wird, dass die Außenstrukturen (21; 217; 218; 219) parallel zu den Innenstrukturen (31; 317; 318; 319) angeordnet sind, wobei die gemeinsame Ebene der Außenstrukturen (21; 217; 218; 219) und die gemeinsame Ebene der Innenstrukturen (31; 317; 318; 319) verschieden sind, und dass die Streifen der Außenstrukturen (21; 217; 218; 219) und die Streifen der Innenstrukturen (31; 317; 318; 319) durch einen mathematischen Ausdruck, welcher die Größen $r$, $d$, $\alpha_\pm$ und $n$ zueinander in Beziehung setzt, vorzugsweise entsprechend der Gleichung

$$\frac{r}{d} = \frac{\sin(\alpha_+)}{\sqrt{n^2 - \sin^2(\alpha_+)}} - \frac{\sin(\alpha_-)}{\sqrt{n^2 - \sin^2(\alpha_-)}}$$ ausgestaltet sind, wobei r der Breite eines der

Streifen der Innenstrukturen (31; 317; 318; 319), $d$ der Dicke des Gebäudehüllenteils (1; 17; 18; 19), $n$ dem mittleren Brechungsindex des Gebäudehüllenteils (1; 17; 18; 19), $\alpha_+$ dem ersten projizierten Einfallwinkel und $\alpha_-$ dem zweiten projizierten Einfallwinkel entspricht.

**17.** Verfahren nach einem der Ansprüche 15 oder 16, bei dem das Gebäudehüllenteil (1; 17; 18; 19) so ausgestaltet wird, dass eine Breite der Streifen der Außenseite, eine Breite der Streifen der Innenseite und jeweils ein Abstand zwischen den Streifen im Wesentlichen gleich dimensioniert sind.

**18.** Computerprogramm, das Programmcodemittel aufweist, die dazu ausgestaltet sind, das Verfahren nach einem der Ansprüche 10 bis 17 zu implementieren, wenn das Computerprogramm auf einem Computer ausgeführt wird.

Fig. 1

Fig. 2

Fig. 3

Fig. 4

Fig. 5

Fig. 6

Fig. 7

**EP 2 538 013 A1**

<div style="border:1px solid">
Europäisches<br>
Patentamt<br>
European<br>
Patent Office<br>
Office européen<br>
des brevets
</div>

**EUROPÄISCHER RECHERCHENBERICHT**

Nummer der Anmeldung

EP 11 17 0686

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y,D | WO 01/53756 A2 (SCHWARZ DIETRICH [CH]) 26. Juli 2001 (2001-07-26) * das ganze Dokument * ----- | 1-18 | INV. E06B3/67 |
| A | WO 2009/121180 A1 (MORGAN SOLAR INC [CA]; MORGAN JOHN PAUL [CA]) 8. Oktober 2009 (2009-10-08) * Abbildung 7b * ----- | 1-18 | |
| Y | US 5 285 315 A (STILES MICHAEL R [US]) 8. Februar 1994 (1994-02-08) * Spalte 1, Zeile 6 - Zeile 14 * * Spalte 2, Zeile 27 - Zeile 30 * * Spalte 3, Zeile 51 - Spalte 20, Zeile 41; Abbildungen * ----- | 1-18 | |
| A | US 6 105 318 A (HARRISON JANET [US]) 22. August 2000 (2000-08-22) * Zusammenfassung; Abbildungen 2,3,5 * * Spalte 7, Zeile 5 - Spalte 14, Zeile 7 * ----- | 1-18 | |
| X | WO 96/03564 A1 (EDGETECH I G LTD [CA]) 8. Februar 1996 (1996-02-08) * Abbildungen 1,9 * ----- | 1 | RECHERCHIERTE SACHGEBIETE (IPC) E06B F24J |

Der vorliegende Recherchenbericht wurde für alle Patentansprüche erstellt

| Recherchenort | Abschlußdatum der Recherche | Prüfer |
|---|---|---|
| Den Haag | 6. Juli 2012 | Verdonck, Benoit |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.............................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 11 17 0686

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-07-2012

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| WO | 0153756 | A2 | 26-07-2001 | AT | 281635 | T | 15-11-2004 |
| | | | | AU | 2338601 | A | 31-07-2001 |
| | | | | CN | 1395671 | A | 05-02-2003 |
| | | | | DE | 50104382 | D1 | 09-12-2004 |
| | | | | EP | 1248932 | A2 | 16-10-2002 |
| | | | | JP | 4664562 | B2 | 06-04-2011 |
| | | | | JP | 2003520915 | A | 08-07-2003 |
| | | | | TW | 451022 | B | 21-08-2001 |
| | | | | US | 2003000171 | A1 | 02-01-2003 |
| | | | | WO | 0153756 | A2 | 26-07-2001 |
| WO | 2009121180 | A1 | 08-10-2009 | KEINE | | | |
| US | 5285315 | A | 08-02-1994 | CA | 2105823 | A1 | 26-03-1994 |
| | | | | US | 5285315 | A | 08-02-1994 |
| US | 6105318 | A | 22-08-2000 | KEINE | | | |
| WO | 9603564 | A1 | 08-02-1996 | AU | 3073495 | A | 22-02-1996 |
| | | | | CA | 2195449 | A1 | 08-02-1996 |
| | | | | GB | 2305206 | A | 02-04-1997 |
| | | | | US | 5494715 | A | 27-02-1996 |
| | | | | WO | 9603564 | A1 | 08-02-1996 |

EPO FORM P0461

Für nähere Einzelheiten zu diesem Anhang : siehe Amtsblatt des Europäischen Patentamts, Nr.12/82

**EP 2 538 013 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0153756 A2